(19) Europäisches Patentamt
European Patent Office
Office européen des brevets

(11) **EP 4 640 524 A1**

(12) **EUROPEAN PATENT APPLICATION**
published in accordance with Art. 153(4) EPC

(43) Date of publication:
29.10.2025 Bulletin 2025/44

(21) Application number: 23907004.8

(22) Date of filing: 19.12.2023

(51) International Patent Classification (IPC):
*B62D 12/00* (2006.01)   *B62D 6/00* (2006.01)
*B62D 13/06* (2006.01)   *B62D 101/00* (2006.01)
*B62D 113/00* (2006.01)

(52) Cooperative Patent Classification (CPC):
**B62D 13/06; B62D 15/029**

(86) International application number:
**PCT/JP2023/045399**

(87) International publication number:
**WO 2024/135644 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 19.12.2022 JP 2022202178

(71) Applicant: JTEKT Corporation
Kariya-shi, Aichi 448-8652 (JP)

(72) Inventors:
• **NITTA Nobuhiro**
**Tokyo 103-0022 (JP)**
• **OHMORI Yosuke**
**Tokyo 103-0022 (JP)**

(74) Representative: **Winter, Brandl - Partnerschaft mbB**
**Alois-Steinecker-Straße 22**
**85354 Freising (DE)**

(54) **COMPUTATION DEVICE FOR ARTICULATED VEHICLE, CONTROL DEVICE FOR ARTICULATED VEHICLE, COMPUTATION METHOD FOR ARTICULATED VEHICLE, AND COMPUTATION PROGRAM FOR ARTICULATED VEHICLE**

(57) An articulated vehicle includes a tractor and a trailer that is towed by the tractor. A computation device (50) of the articulated vehicle is configured to execute curvature variable acquisition processing, trailer length variable acquisition processing, and virtual steering angle calculation processing. The curvature variable acquisition processing is processing of acquiring a value of a curvature variable. The curvature variable is a variable indicating a curvature of a path of travel of the trailer. The trailer length variable acquisition processing is processing of acquiring a value of a trailer length variable. The trailer length variable is a variable indicating a length of the trailer. The virtual steering angle calculation processing is processing of calculating a virtual steering angle using the value of the curvature variable and the value of the trailer length variable as inputs. The virtual steering angle is an angle indicating a displacement direction of a linking point between the trailer and the tractor.

Fig.9

**Description**

TECHNICAL FIELD

The present disclosure relates to a computation device for an articulated vehicle, a control device for an articulated vehicle, a computation method for an articulated vehicle, and a computation program for an articulated vehicle.

BACKGROUND ART

Patent Document 1 listed below, for example, describes a control device that executes reverse assistance control for a trailer. This control device estimates a hitch angle using a yaw rate of the trailer and a yaw rate of a tractor. The hitch angle that is estimated is then used to execute reverse assistance control.

Related Art Documents

Patent Documents

Patent Document 1: US Patent No. 9340228

SUMMARY OF THE INVENTION

Problem to be Solved by the Invention

The above-described control device uses the yaw rate of the tractor to calculate variables that are used in traveling control of the trailer. However, in cases in which the trailer is displaced in a state in which the tractor is stopped due to a curb, or the like, for example, the yaw rate of the tractor may be inappropriate as a value to use for calculating variables that are used in travelling control of the trailer.

Means for Solving the Problem

In one aspect of the present disclosure, a computation device for an articulated vehicle is provided. The articulated vehicle includes a tractor and a trailer that is towed by the tractor. The computation device of the articulated vehicle is configured to execute curvature variable acquisition processing, trailer length variable acquisition processing, and virtual steering angle calculation processing. The curvature variable acquisition processing is processing of acquiring a value of a curvature variable. The curvature variable is a variable indicating a curvature of a path of travel of the trailer. The trailer length variable acquisition processing is processing of acquiring a value of a trailer length variable. The trailer length variable is a variable indicating a length of the trailer. The virtual steering angle calculation processing is processing of calculating a virtual steering angle using the value of the curvature variable and the value of the trailer length variable as inputs. The virtual steering angle is an angle indicating a displacement direction of a linking point between the trailer and the tractor.

In another aspect of the present disclosure, a control method for an articulated vehicle is provided. The articulated vehicle includes a tractor and a trailer that is towed by the tractor. The control method for the articulated vehicle is a method of executing curvature variable acquisition processing, trailer length variable acquisition processing, and virtual steering angle calculation processing. The curvature variable acquisition processing is processing of acquiring a value of a curvature variable. The curvature variable is a variable indicating a curvature of a path of travel of the trailer. The trailer length variable acquisition processing is processing of acquiring a value of a trailer length variable. The trailer length variable is a variable indicating a length of the trailer. The virtual steering angle calculation processing is processing of calculating a virtual steering angle using the value of the curvature variable and the value of the trailer length variable as inputs. The virtual steering angle is an angle indicating a displacement direction of a linking point between the trailer and the tractor.

In another aspect of the present disclosure, a control program for an articulated vehicle is provided. The articulated vehicle includes a tractor and a trailer that is towed by the tractor. The control program for the articulated vehicle causes a computer to execute curvature variable acquisition processing, trailer length variable acquisition processing, and virtual steering angle calculation processing. The curvature variable acquisition processing is processing of acquiring a value of a curvature variable. The curvature variable is a variable indicating a curvature of a path of travel of the trailer. The trailer length variable acquisition processing is processing of acquiring a value of a trailer length variable. The trailer length variable is a variable indicating a length of the trailer. The virtual steering angle calculation processing is processing of calculating a virtual steering angle using the value of the curvature variable and the value of the trailer length variable as inputs. The virtual steering angle is an angle indicating a displacement direction of a linking point between the trailer and the tractor.

BRIEF DESCRIPTION OF THE DRAWINGS

[FIG. 1] FIG. 1 is a perspective view illustrating a configuration of an articulated vehicle according to a first embodiment.
[FIG. 2] FIG. 2 is a block diagram illustrating a configuration of a control system according to the embodiment.
[FIG. 3] FIG. 3 is a flowchart showing procedures of processing that is executed by a control device according to the embodiment.
[FIG. 4] FIG. 4 is a flowchart showing procedures of processing that is executed by the control device according to the embodiment.
[FIG. 5] FIG. 5 is a flowchart showing procedures of processing that is executed by the control device according to the embodiment.
[FIG. 6] FIGS. 6A and 6B are diagrams showing effects of the embodiment.
[FIG. 7] FIG. 7 is a flowchart showing procedures of processing that is executed by a control device according to a second embodiment.
[FIG. 8] FIG. 8 is a flowchart showing procedures of processing that is executed by a control device according to a third embodiment.
[FIG. 9] FIG. 9 is a diagram illustrating a model used to calculate a hitch angle in the embodiment.

MODES FOR CARRYING OUT THE INVENTION

<First Embodiment>

A first embodiment will be described below with reference to the drawings.

"Configuration of Articulated Vehicle"

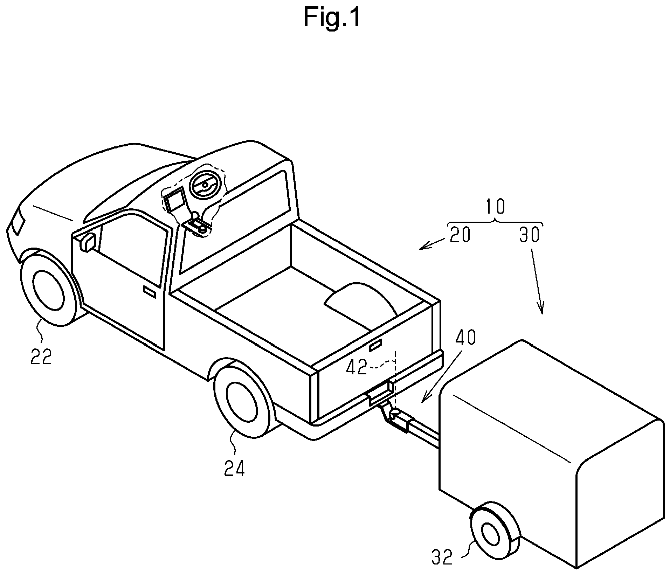

As illustrated in FIG. 1, an articulated vehicle 10 includes a tractor 20 and a trailer 30. In FIG. 1, a pickup truck, which is a type of a small truck, is exemplified as the tractor 20. The tractor 20 includes front wheels 22 and rear wheels 24. The front wheels 22 include two wheels, which are a right front wheel and a left front wheel, and the rear wheels 24 include two wheels, which are a right rear wheel and a left rear wheel. Also, FIG. 1 exemplifies an enclosed box trailer as the trailer 30. The trailer 30 includes wheels 32. The wheels 32 include two wheels, which are a right wheel and a left wheel.
The trailer 30 is linked to a rear portion of the tractor 20 via a ball joint 40. The ball joint 40 is a member that links the trailer 30 to the tractor 20 such that the trailer 30 can rotate about an axis 42. The axis 42 extends in a height direction of the tractor 20.

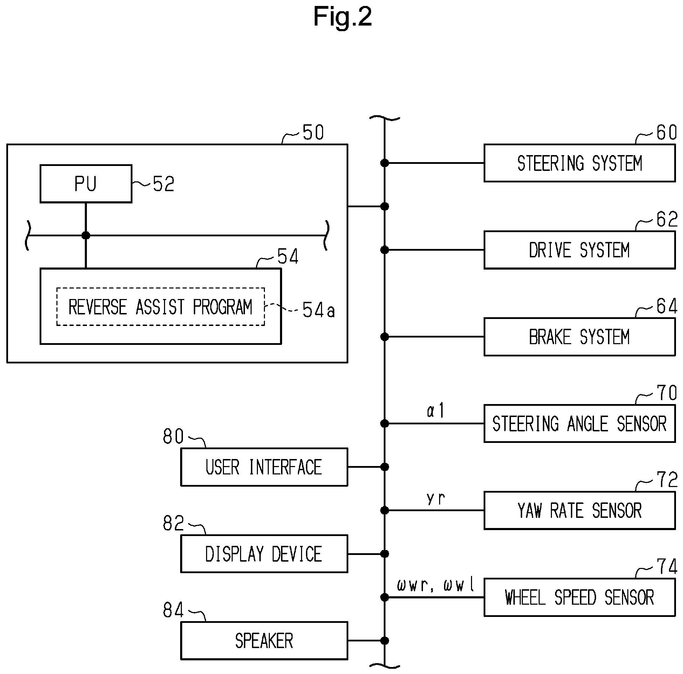

FIG. 2 illustrates part of members that the articulated vehicle 10 is equipped with. As illustrated in FIG. 2, the articulated vehicle 10 includes a control device 50. More specifically, the tractor 20 includes the control device 50. The control device 50 operates a steering system 60 of the tractor 20, a drive system 62 of the tractor 20, and a brake system 64 of the tractor 20, in order to control controlled variables of the articulated vehicle 10 serving an object of control. The controlled variables are vehicle speed, direction of travel, hitch angle, and so forth. The hitch angle is an angle that is formed between a front-rear direction of the tractor 20 and a front-rear direction of the trailer 30.
The steering system 60 includes a steering actuator that steers steered wheels of the tractor 20. An example of the steered wheels is the front wheels 22 illustrated in FIG. 1. Note that the steering system 60 may include a steering control device that operates the steering actuator. In that case, "the control device 50 operates the steering system 60" means that the control device 50 outputs command signals to the steering control device.
The drive system 62 includes at least one of two devices, which are an internal combustion engine and a rotating electrical machine, as a thrust generating device for the vehicle. Note that the drive system 62 may include a drive control device regarding which the internal combustion engine and the rotating electrical machine are objects of control. In this case, "the control device 50 operates the drive system 62" means that the control device 50 outputs command signals to the drive control device.
The brake system 64 includes at least one of two devices, which are a device that reduces the speed of rotation of the wheels of the tractor 20 by frictional force, and a device that reduces the speed of rotation of the wheels of the tractor 20 by converting power of the wheels into electrical energy. Note that the device that reduces the speed of rotation of the wheels of the tractor 20 by conversion into electrical energy may be shared with the rotating electrical machine of the drive system. Note that the brake system 64 may include a brake control device of which the devices that reduce the speed of rotation of the wheels are objects of control. In this case, "the control device 50 operates the brake system 62" means that the control device 50 outputs command signals to the brake control device.

The control device 50 references a steered angle $\alpha1$ of the steered wheels of the tractor 20 that is detected by a steering angle sensor 70 in order to control the controlled variables. The steered angle $\alpha1$ is a value of which the sign is positive in accordance with either a right turn or a left turn, and of which the sign is negative in accordance with the other thereof. The steered angle $\alpha1$ is a turning angle of tires. The control device 50 also references a yaw rate yr of the trailer 30 that is detected by a yaw rate sensor 72. Note that in a case in which a user appropriately selects and employs a trailer 30 to be linked to the tractor 20 from among a plurality of trailers 30, the yaw rate sensor 72 that is provided to the trailer 30 that is adopted is connected to an electronic component of the tractor 20. The control device 50 also refers to wheel speeds $\omega wr$ and $\omega wl$ of the trailer 30 that are detected by a wheel speed sensor 74. The wheel speeds $\omega wr$ and $\omega wl$ are rotational speeds of the wheel 32 on the right side and the rotational speed of the wheel 32 on the left side, respectively. Note that in a case in which the user appropriately selects and employs a trailer 30 to be linked to the tractor 20 from among the plurality of trailers 30, the wheel speed sensor 74 that is provided to the trailer 30 that is employed is connected to an electronic component of the tractor 20.

The control device 50 sets control of the controlled variables in accordance with an operating state of a user interface 80. The user interface 80 has functions of transmitting intentions of the user to the control device 50, such as an intent to select one of two operations, which are manually steering the articulated vehicle 10, and automatically steering the articulated vehicle 10.

The control device 50 includes a PU 52 and a storage device 54. The PU 52 is a software processing device including at least one of a CPU, a GPU, a TPU, and so forth. The storage device 54 stores a reverse assist program 54a.

The reverse assist program 54a defines commands for executing reverse assist processing. The reverse assist processing is processing that is to be executed by the PU 52 in order to assist in reversing the articulated vehicle 10. The reverse assist processing is processing of performing automatic steering of the tractor 20. In the reverse assist processing, however, brake operations and accelerator operations are left to a driver. The reverse assist processing also includes processing of receiving a request to steer the trailer 30. In the reverse assist processing, the steered angle of the tractor 20 is controlled so as to meet the request to steer the trailer 30.

Now, the request to steer the trailer 30 is input by the driver via the user interface 80. The request to steer is communicated by instructing a virtual steering angle $\alpha2$ for the trailer 30. The virtual steering angle $\alpha2$ is an angle that indicates a displacement direction of the trailer 30 at a connection point between the trailer 30 and the tractor 20. In other words, the virtual steering angle $\alpha2$ is an angle that indicates a displacement direction of the axis 42. For example, instruction of the virtual steering angle $\alpha2$ may be implemented by providing the user interface 80 with a dial that has a positive correlation with the virtual steering angle $\alpha2$. It is not imperative for a rotational angle of the dial and the virtual steering angle $\alpha2$ to have a proportional relationship. Note that in the following description, the virtual steering angle $\alpha2$ that is instructed by the driver is referred to as target virtual steering angle $\alpha2^*$.

The reverse assist processing is executed using the virtual steering angle $\alpha2$ that is estimated from detection values of the sensors. In the following, various types of pre-processing steps for estimating the virtual steering angle $\alpha2$, and the reverse assist processing, will be described in that order.

"Acquiring Length of Trailer"

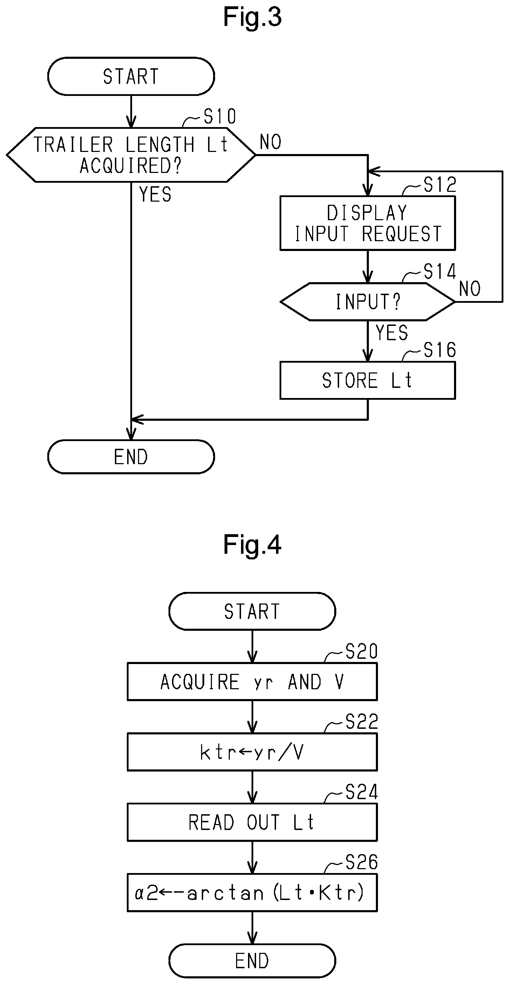

FIG. 3 shows procedures for processing of acquiring trailer length Lt. The trailer length Lt is the length of a line connecting the middle of a line segment connecting each of the rotation centers of the two wheels 32 to each other, and the axis 42. A series of processing shown in FIG. 3 is realized by the PU 52 repeatedly executing the reverse assist program 54a at predetermined cycles, for example. Note that in the following, the step number of each processing is expressed by a number preceded by "S".

In the series of processing shown in FIG. 3, the PU 52 first determines whether or not the trailer length Lt has been acquired (S10). The PU 52 may determine that the trailer length Lt has been acquired, for example, in a case in which the trailer length Lt is stored in a predetermined storage region of the storage device 54. However, when the trailer 30 that is linked to the tractor 20 is changed, the user preferably operates the user interface 80 to make notification to that effect. In this case, in a case in which the trailer length Lt is stored in the predetermined storage region, the PU 52 may delete the trailer length Lt for the time being.

In a case in which the PU 52 determines that the trailer length Lt has not yet been acquired (S10: NO), the PU 52 displays visual information prompting the user to input the trailer length Lt by operating the display device 82 (S12). The PU 52 then stands by until the trailer length Lt is input by operating the user interface 80 (S14: NO). In a case in which the PU 52 determines that the trailer length Lt has been input (S14: YES), the PU 52 stores the trailer length Lt in the predetermined storage region of the storage device 54 (S16).

Note that the PU 52 ends the series of processing shown in FIG. 3 for the time being, in a case in which a positive determination is made in the processing of S10, or in a case in which the processing of S16 is completed.

"Calculation of Virtual Steering Angle $\alpha2$"

FIG. 4 shows procedures for processing relating to calculating the virtual steering angle $\alpha2$. The series of processing shown in FIG. 4 is realized by the PU 52 repeatedly executing the reverse assist program 54a at predetermined cycles, for example.

In the series of processing shown in FIG. 4, the PU 52 first acquires the yaw rate yr of the trailer 30 and vehicle speed V of the trailer 30 (S20). The vehicle speed V of the trailer 30 is calculated by the PU 52 in accordance with at least one of the wheel speeds $\omega$wr and $\omega$wl. The vehicle speed V may be, for example, an average value of the wheel speeds $\omega$wr and $\omega$wl. Next, the PU 52 substitutes a value, obtained by dividing the yaw rate yr by the vehicle speed V, into a curvature ktr (S22). The PU 52 then reads out the trailer length Lt that is stored in the above predetermined storage region (S24). The PU 52 then substitutes a value, obtained by multiplying a value of a dependent variable of an arctangent function, of which has the product of the trailer length Lt and the curvature ktr is the independent variable, by "-1", into the virtual steering angle $\alpha2$ (S26).

Note that in a case in which the processing of S26 is completed, the PU 54 ends the series of processing shown in FIG. 4 for the time being.

"Reverse Assist Processing"

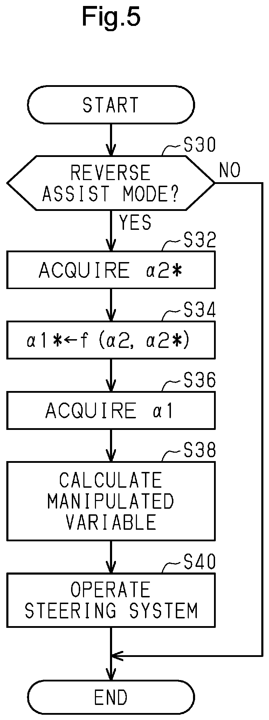

FIG. 5 shows procedures of processing for the reverse assist processing. The series of processing shown in FIG. 5 is realized by the PU 52 repeatedly executing the reverse assist program 54a at predetermined cycles, for example.

In the series of processing shown in FIG. 5, the PU 52 first determines whether or not a current mode is a reverse assist mode (S30). In a case in which determination is made that the mode is the reverse assist mode (S30: YES), the PU 52 acquires the target virtual steering angle $\alpha2^*$ (S32). The PU 52 then substitutes the manipulated variable for the control, in which the virtual steering angle $\alpha2$ that is calculated by the processing of FIG. 4 is the controlled variable and also the target virtual steering angle $\alpha2^*$ is a target value of the controlled variable, into the target steered angle $\alpha1^*$ (S34). This manipulated variable may be a manipulated variable from feedback control. Also, for example, this manipulated variable may be a sum of a manipulated variable of feedback control and a manipulated variable of open loop control.

Next, the PU 52 acquires the steered angle $\alpha1$ (S36). The PU 52 then calculates the manipulated variable of control in which the steered angle $\alpha1$ is the controlled variable and also the target steered angle $\alpha1^*$ is the target value of the controlled variable (S38). This manipulated variable may be a manipulated variable from feedback control. Also, for example, this manipulated variable may be a sum of a manipulated variable of feedback control and a manipulated variable of open loop control. This manipulated variable may be, for example, torque of a motor of the steering system 60.

The PU 52 then operates the steering system 60 in accordance with the manipulated variable (S40). Note that the PU 52 ends the series of processing shown in FIG. 5 for the time being, in a case in which the processing of S40 is completed, or in a case in which a negative determination is made in the processing of S30.

"Functions and Effects of Present Embodiment"

The PU 52 calculates the curvature ktr of a path of travel of the trailer 30 based on the yaw rate yr of the trailer 30 and the vehicle speed V of the trailer 30 as input variables. The PU 52 calculates the virtual steering angle $\alpha2$ based on the curvature ktr of the path of travel of the trailer 30 as input. The PU 52 controls the virtual steering angle $\alpha2$ so as to approach the target virtual steering angle $\alpha2^*$.

Thus, according to the present embodiment, traveling control of the trailer 30 can be executed without using the detection value of yaw rate of the tractor 20. In a case in which the detection value of the yaw rate of the tractor 20 is not used, the virtual steering angle $\alpha2$ can be calculated with high precision even in a state in which the tractor 20 is stopped, and also only the trailer 30 is being displaced, for example. Using the virtual steering angle $\alpha2$ as the manipulated variable for feedback control enables traveling of the trailer 30 to be controlled with high precision.

The present embodiment described above further has the following functions and effects.
(1-1) The virtual steering angle $\alpha2$ is calculated using the actual curvature ktr obtained by the trailer 30 traveling. This enables calculation of the virtual steering angle $\alpha2$ with higher precision than a case in which the virtual steering angle $\alpha2$ is calculated using a model expression for the articulated vehicle 10.

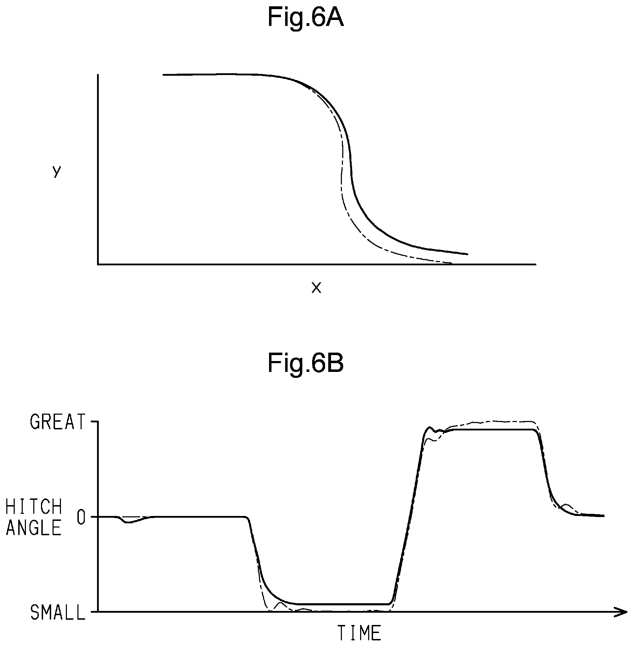

In FIGS. 6A and 6B, continuous lines indicate the travelling control of the trailer 30 using the virtual steering angle $\alpha2$ according to the present embodiment. Also, in FIGS. 6A and 6B, dashed lines indicate a comparative example of traveling control of the trailer 30 using the virtual steering angle $\alpha2$ calculated using the model expression.

In detail, FIG. 6A shows the path of travel of the trailer 30. In FIG. 6A, the vertical axis is the y axis of a plane coordinate system, and the horizontal axis is the x-axis of the plane coordinate system. As shown in FIG. 6A, there is difference occurring in the curvature caused by the traveling of the trailer 30, between the case of the present embodiment and the comparative example. This is because error occurs in the model in the case of the model expression. In contrast to this, in the case of the present embodiment, the virtual steering angle $\alpha2$ calculated in accordance with the actual curvature of the trailer 30 is used as the controlled variable, and accordingly the path of travel of the trailer 30 can be controlled with high accuracy.

FIG. 6B shows transition of the hitch angle. As shown in FIG. 6B, a continual deviation occurs in the transition of the hitch angle between the present embodiment and the comparative example. This difference is due to model error in the comparative example.

(1-2) In a case in which the PU 52 has not acquired the trailer length Lt, the PU 52 prompts the user to input the trailer length Lt. This enables acquisition of the trailer length Lt.

<Second Embodiment>

A second embodiment will be described below with reference to the drawings, focusing on differences with respect to the first embodiment.

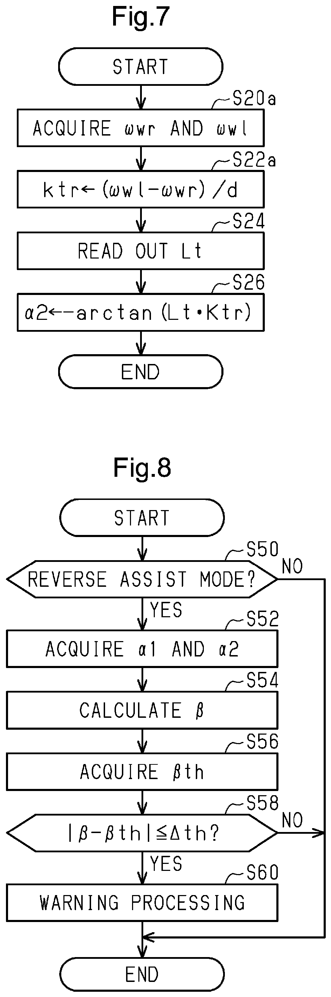

FIG. 7 shows procedures for processing relating to calculating the virtual steering angle $\alpha2$ according to the present embodiment. The series of processing shown in FIG. 7 is realized by the PU 52 repeatedly executing the reverse assist program 54a at predetermined cycles, for example. Note that in FIG. 7, processing corresponding to the processing shown in FIG. 4 is denoted by the same step signs, for the sake of convenience.

In the series of processing shown in FIG. 7, the PU 52 first acquires the wheel speeds $\omega wr$ and $\omega wl$ (S20a). Next, the PU 52 substitutes, into the curvature ktr, a value obtained by dividing a value, obtained by subtracting the wheel speed $\omega wr$ from the wheel speed $\omega wl$, by tread width d (S22a). The tread width d is a distance between the centers of rotation of the two wheels 32 of the trailer 30.

The PU 52 then executes the processing of S24 and S26, and ends the series of processing shown in FIG. 7 for the time being.

<Third Embodiment>

A third embodiment will be described below with reference to the drawings, focusing on differences with respect to the first embodiment.

In the present embodiment, in a case in which the possibility of a jackknife phenomenon occurring increases, processing of issuing a warning to that effect is executed. The jackknife phenomenon is a phenomenon in which the magnitude of the hitch angle becomes excessively great, to an extent that the trailer 30 becomes unnavigable.

FIG. 8 shows procedures of processing related to the aforementioned warning. The series of processing shown in FIG. 8 is realized by the PU 52 repeatedly executing the reverse assist program 54a at predetermined cycles, for example.

In the series of processing shown in FIG. 8, the PU 52 first determines whether or not the current mode is the reverse assist mode (S50). In a case in which determination is made that the current mode is the reverse assist mode (S50: YES), the PU 52 acquires the steered angle $\alpha1$ and the virtual steering angle $\alpha2$ (S52). The PU 52 then calculates a hitch angle $\beta$ using the following Expression (c1) (S54).

$$\beta = -\alpha2 - \arctan\{(h1/l1)\cdot\tan(\alpha1)\} \ldots (c1)$$

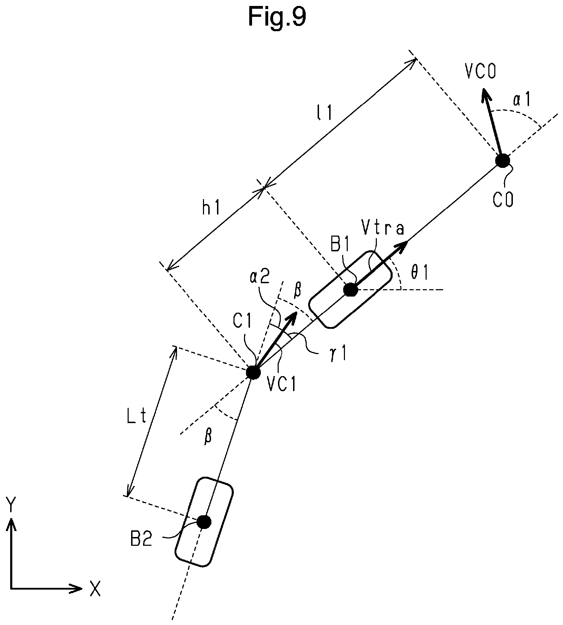

The above Expression (c1) is an Expression that is based on a model of the tractor 20 and the trailer 30. FIG. 9 illustrates the above model. In the model illustrated in FIG. 9, a pair of the front wheels 22 of the tractor 20 correspond to a front wheel C0, and also a pair of the rear wheels 24 of the tractor 20 correspond to a rear wheel B1. That is to say, a two-wheel model is employed regarding the tractor 20. Also, a pair of the wheels 32 of the trailer 30 corresponds to a wheel B2. An angle formed between a line that is determined by the front wheel C0 and a hitch point C1, and a line determined by the hitch point C1 and the wheel B2, is the hitch angle $\beta$. The hitch point C1 corresponds to the axis 42 in FIG. 1. Also, a front wheel speed VC0, which is speed of the front wheel C0, is a vector quantity of advance in a direction of the steered angle $\alpha1$. The steered angle $\alpha1$ is quantified as an angle formed between a direction in which the front wheel C0 advances and the line that is determined by the front wheel C0 and the hitch point C1. A direction of vehicle speed Vtra of the tractor 20 is parallel to the line defined by the front wheel C0 and the hitch point C1. Also, an angle formed between the direction of the vehicle speed Vtra and an x direction in FIG. 4 is an angle $\theta1$. Also, a distance l1 is a length between the front wheel C0 and the rear wheel B1. Also, a distance h1 is a length between the rear wheel B1 and the hitch point C1.

Note that in FIG. 9, a distance from the hitch point C1 to the center of rotation of the wheel B2 is indicated by the trailer length Lt. In the present embodiment, a direction of speed VC1 of the hitch point C1 with respect to a direction of advance from the wheel B2 to the hitch point C1 is the virtual steering angle $\alpha2$. Accordingly, the virtual steering angle $\alpha2$ is

given by "-($\beta$ - $\gamma$1)", using an angle $\gamma$1 of the direction of the speed VC1 of the hitch point C1 with respect to a direction of travel from the hitch point C1 to the front wheel C0.

In the model illustrated in FIG. 9, the following Expressions (c2) to (c4) hold when using coordinates (xc0, yc0) of the front wheel C0, coordinates (xb1, yb1) of the rear wheel B1, and coordinates (xc1, yc1) of the hitch point C1.

$$VC0 \cdot cos\alpha1 = VB1 \;...(c2)$$

$$xc0 = xb1 + l1 \cdot cos\theta1 \;...(c3)$$

$$xc1 = xb1 - h1 \cdot cos\theta1 \;...(c4)$$

The following Expression (c5) is obtained using an expression obtained by differentiating both sides of the above Expressions (c3) and (c4), and the Expression (c2).

$$h1 \cdot tan\alpha1 + l1 \cdot tan\gamma1 = 0 \;...(c5)$$

According to the above Expression (c5), the angle $\gamma$1 can be expressed by the steered angle $\alpha$1. Accordingly, the hitch angle $\beta$ is expressed by the above Expression (c1).

Returning to FIG. 8, the PU 52 acquires a jackknife hitch angle $\beta$th (S56). In the present embodiment, the jackknife hitch angle $\beta$th is a fixed value determined in accordance with the greatest value of the steered angle $\alpha$1.

That is to say, according to the model illustrated in FIG. 9, a first-order time derivative value of the hitch angle $\beta$ is expressed by the following Expression (c6).

$$d\beta/dt = -(Vtra/l2) \cdot sin\beta - \{Vtra/(l1 \cdot l2)\} \cdot (l2 + h1 \cdot cos\beta) \cdot tan\alpha \;...(c6)$$

Now, in a case in which the jackknife phenomenon occurs, the hitch angle $\beta$ cannot be changed, even by changing the steered angle $\alpha$1 to a maximum value $\alpha$1th. Accordingly, the hitch angle $\beta$, when the time derivative value of the hitch angle $\beta$ in the above Expression (c6) is set to zero and also the maximum value $\alpha$1th is substituted into the steered angle $\alpha$1, is deemed to be the jackknife hitch angle $\beta$th. Note however, that the steered angle $\alpha$1 can take either positive or negative values, and accordingly both "$\alpha$1th" and "(-1)$\cdot\alpha$th" can be substituted into the above Expression (c6). Thus, the jackknife hitch angle $\beta$th actually takes two values. These two jackknife hitch angles $\beta$th are stored in advance in the storage device 54. Further, in the processing of S56, the PU 52 selects the one of the two values by which an absolute value of difference from the hitch angle $\beta$ becomes smaller, in accordance with the sign of the steered angle $\alpha$1 and the sign of the change rate of the steered angle $\alpha$1.

Next, the PU 52 determines whether or not an absolute value of difference between the hitch angle $\beta$ and the jackknife hitch angle $\beta$th is no greater than a threshold value $\Delta$th (S58). This processing is processing for determining whether or not the current state is a state is in which the jackknife phenomenon will readily occur. In a case in which determination is made that the difference is no greater than the threshold value $\Delta$th (S58: YES), the PU 52 operates a speaker 84 to warn the driver to the effect that the current state is in a state in which the jackknife phenomenon will readily occur (S60).

Note that the PU 52 ends the series of processing shown in FIG. 8 for the time being in a case in which the processing of S60 is complete, or in a case in which negative determination is made in the processing of S50 and S58. Thus, according to the present embodiment, processing is executed to suppress the jackknife phenomenon from occurring by using the hitch angle $\beta$. The hitch angle $\beta$, which is the input for this processing, is calculated without using the detected value of the yaw rate of the tractor 20. Accordingly, even in a state in which the tractor 20 is stopped, and also only the trailer 30 is being displaced, for example, the hitch angle $\beta$ that is calculated with high precision can be used.

<Other Embodiments>

Note that the present embodiment can be carried out modified as follows. The present embodiment and the following modifications can be carried out combined with each other insofar as no technical contradictions arise.

"Regarding Curvature Variables"

- The curvature variable does not necessarily have to be the curvature ktr. For example, it may be the radius of curvature.

"Regarding Curvature Variable Acquisition Processing"

- Curvature variable acquisition processing is not limited to the processing of calculating the curvature ktr based on the yaw rate yr and the vehicle speed V as inputs. The curvature variable acquisition processing may be, for example, processing of calculating the curvature ktr based on the path of travel of the trailer 30 as an input. Here, the path of travel is time-series data of coordinates of the trailer 30. The processing of acquiring the coordinates of the trailer 30 may be processing that utilizes, for example, a global positioning system or the like. Also, the processing of acquiring the coordinates of the trailer 30 may be processing that uses image data of surroundings of the trailer 30 shot by a camera, and map data.

"Regarding Trailer Length Variable Acquisition Processing"

- Trailer length variable acquisition processing is not limited to processing of accepting input of the trailer length by the user. For example, the trailer length variable acquisition processing may be processing of measuring the trailer length based on image data of the trailer shot by a camera installed in the tractor 20 as input.

"Regarding Trailer Length Variable"

- A trailer length variable does not necessarily have to be the trailer length Lt. For example, the trailer length variable may be a label variable indicating one of large, medium, or small, depending on the magnitude of the value that the trailer length Lt can take. In this case, virtual steering angle calculation processing may be processing of calculating the virtual steering angle $\alpha2$ using one trailer length Lt corresponding to each of large, medium, and small.

"Regarding Virtual Steering Angle Calculation Processing"

- The virtual steering angle calculation processing does not necessarily have to include processing of inputting the value of the independent variable into the arctangent function. For example, the virtual steering angle calculation processing may be processing in which the PU 52 performs map computation of the virtual steering angle $\alpha2$, in a state in which map data is stored in the storage device 54. Here, the map data is data in which the curvature ktr and the trailer length Lt are input variables, and also the virtual steering angle $\alpha2$ is an output variable.

Now, the map data is a data set of discrete values of the input variables and values of the output variable corresponding to each of the values of the input variables. Also, the map computation can be processing that, in a case in which the values of the input variables agree with any of the values of the input variables in the map data, takes a corresponding value of the output variable in the map data as a computation result. Also, the map computation can be processing that, in a case in which the values of the input variables do not agree with any of the values of the input variables in the map data, takes a value obtained by interpolating a plurality of values of the output variable that are included in the map data as a computation result. Also, alternatively, the map computation may be processing that, in a case in which the values of the input variables do not agree with any of the values of the input variables in the map data, takes the value of the output variable in the map data that corresponds to a closest value out of values of the plurality of input variables included in the map data, as a calculation result.

"Regarding Virtual Steering Angle Control Processing"

The virtual steering angle control processing is not limited to processing in which the virtual steering angle $\alpha2$ is a controlled variable and also the target virtual steering angle $\alpha2^*$ is a target value of the controlled variable, and in which the manipulated variable of control is substituted into the target steered angle $\alpha1^*$. For example, the virtual steering angle control processing may be processing in which a manipulated variable for control, in which the virtual steering angle $\alpha 2$ is a controlled variable and also the target virtual steering angle $\alpha 2^*$ is a target value of the controlled variable, is substituted into the torque command value of the motor of the steering system 60.

- The virtual steering angle control processing does not necessarily have to be processing related to the control of reversing of the trailer 30. The virtual steering angle control processing may be, for example, processing related to forward travel control of the trailer 30.

"Regarding Hitch Angle Calculation Processing"

Hitch angle calculation processing is not limited to processing of performing computation using the above Expression (c1). For example, the hitch angle calculation processing may be processing in which the PU 52 performs map computation of the hitch angle $\beta$, in a state in which map data is stored in the storage device 54. Here, the map data is data in which the steered angle $\alpha 1$ and the virtual steering angle $\alpha 2$ are input variables and also the hitch angle $\beta$ is an output variable.

"Regarding Operating Processing"

- Operating processing is not limited to the processing of S60. For example, the operating processing may be processing of operating the steering system 60, with the steering system 60 being predetermined hardware. This can be realized by including, in the operating processing, processing of substituting a manipulated variable for control, in which the hitch angle $\beta$ is the controlled variable and also the target value of the hitch angle $\beta$ is the target value of the controlled variable, into the target steered angle $\alpha 1^*$, for example.

  - The operating processing does not necessarily have to be processing related to the control of reversing of the trailer 30. The operating processing may be, for example, processing related to forward travel control of the trailer 30. "Regarding Predetermined Hardware"

- In the processing of S60, processing has been exemplified in which the predetermined hardware to be operated is the speaker 84, but this is not restrictive. For example, a warning light may be the predetermined hardware. Also, for example, as described in the section "Regarding Operating Processing", the steering system 60 may be the predetermined hardware.

"Regarding Control Device"

- The control device is not limited to an arrangement that includes the PU 52 and the storage device 54, and that executes software processing. For example, the control device may include a dedicated hardware circuit such as an ASIC or the like, for example, that performs at least part of the processing executed in the above embodiments. That is to say, the control device may include any processing circuit of the following (a) to (c). (a) A processing circuit including a processing device that executes all of the above processing according to a program, and a program storage device such as a storage device or the like that stores the program. (b) A processing circuit including a processing device that executes part of the above processing according to a program, a program storage device, and a dedicated hardware circuit that executes the remainder of the above processing. (c) A processing circuit including a dedicated hardware circuit that executes all of the above processing. There may be a plurality of software execution devices that include a processing device and a program storage device, and a plurality of dedicated hardware circuits.

"Regarding Computer"

- The computer is not limited to the PU 52 installed in the vehicle. For example, the processing shown in FIG. 3 may be executed by a mobile terminal of the user, and also the processing shown in FIG. 4 and FIG. 5 may be executed by the PU 52.

"Regarding Vehicle"

- The articulated vehicle is not limited to the vehicle exemplified in FIG. 1.

While the present disclosure has been described based on embodiments, it is to be understood that the present disclosure is not limited to these embodiments or structures. The present disclosure also includes various alterations and modifications that fall within the scope of equivalence. In addition, various combinations and forms, as well as other combinations and forms that include only one element or more or fewer elements, fall within the scope of or the scope of concept of the present disclosure.

It should be understood that the expression "at least one of A and B" as used in the present specification means "only A, only B, or both A and B".

**Claims**

1. A computation device for an articulated vehicle that is applied to the articulated vehicle including a tractor and a trailer that is towed by the tractor, wherein:

   the computation device is configured to execute curvature variable acquisition processing, trailer length variable acquisition processing, and virtual steering angle calculation processing;
   the curvature variable acquisition processing is processing of acquiring a value of a curvature variable;
   the curvature variable is a variable indicating a curvature of a path of travel of the trailer;
   the trailer length variable acquisition processing is processing of acquiring a value of a trailer length variable;
   the trailer length variable is a variable indicating a length of the trailer;
   the virtual steering angle calculation processing is processing of calculating a virtual steering angle using the value of the curvature variable and the value of the trailer length variable as inputs; and
   the virtual steering angle is an angle indicating a displacement direction of a linking point between the trailer and the tractor.

2. The computation device for the articulated vehicle according to claim 1, wherein:

   the computation device is configured to execute steered angle acquisition processing and hitch angle calculation processing;
   the steered angle acquisition processing is processing for acquiring a steered angle of a steered wheel of the tractor;
   the hitch angle calculation processing is processing of calculating a hitch angle using the virtual steering angle and the steered angle as inputs; and
   the hitch angle is an angle that is formed between a front-rear direction of the tractor and a front-rear direction of the trailer.

3. The computation device for the articulated vehicle according to claim 1, wherein:

   the computation device is configured to execute yaw rate acquisition processing and vehicle speed acquisition processing;
   the yaw rate acquisition processing is processing of acquiring a yaw rate of the trailer;
   the vehicle speed acquisition processing is processing of acquiring a vehicle speed of the trailer; and
   the curvature variable acquisition processing is processing for acquiring the value of the curvature variable by calculating the value of the curvature variable using the yaw rate and the vehicle speed as inputs.

4. The computation device for the articulated vehicle according to claim 3, wherein:

   the trailer is provided with a yaw rate sensor; and
   the yaw rate acquisition processing is processing for acquiring the yaw rate that is detected by the yaw rate sensor.

5. The computation device for the articulated vehicle according to claim 3, wherein:

the trailer is provided with wheel speed sensors for detecting speeds of each of right and left wheels;

the yaw rate acquisition processing is processing for acquiring the yaw rate by calculating the yaw rate using detection values of wheel speeds of the right and left wheels that are detected by the wheel speed sensors as input.

6. A control device for an articulated vehicle, wherein:

the control device is configured to execute each of the processing that is executed by the computation device for the articulated vehicle according to claim 1, and virtual steering angle control processing; and

the virtual steering angle control processing is processing for operating a steered angle of the tractor by a manipulated variable for control in which the virtual steering angle is a controlled variable and also a target virtual steering angle is a target value of the controlled variable.

7. A control device for an articulated vehicle, wherein:

the control device is configured to execute each of the processing that is executed by the computation device for the articulated vehicle according to claim 2, and operating processing; and

the operating processing is processing for operating predetermined hardware using the hitch angle as an input.

8. A computation method for an articulated vehicle, the computation method being applied to an articulated vehicle including a tractor and a trailer that is towed by the tractor, and the computation method comprising executing curvature variable acquisition processing, trailer length variable acquisition processing, and virtual steering angle calculation processing, wherein:

the curvature variable acquisition processing is processing of acquiring a value of a curvature variable;

the curvature variable is a variable indicating a curvature of a path of travel of the trailer;

the trailer length variable acquisition processing is processing of acquiring a value of a trailer length variable;

the trailer length variable is a variable indicating a length of the trailer;

the virtual steering angle calculation processing is processing of calculating a virtual steering angle using the value of the curvature variable and the value of the trailer length variable as inputs; and

the virtual steering angle is an angle indicating a displacement direction of a linking point between the trailer and the tractor.

9. A computation program for an articulated vehicle, the computation program being applied to an articulated vehicle including a tractor and a trailer that is towed by the tractor, and causing a computer to execute curvature variable acquisition processing, trailer length variable acquisition processing, and virtual steering angle calculation processing, wherein:

the curvature variable acquisition processing is processing of acquiring a value of a curvature variable;

the curvature variable is a variable indicating a curvature of a path of travel of the trailer;

the trailer length variable acquisition processing is processing of acquiring a value of a trailer length variable;

the trailer length variable is a variable indicating a length of the trailer;

the virtual steering angle calculation processing is processing of calculating a virtual steering angle using the value of the curvature variable and the value of the trailer length variable as inputs; and

the virtual steering angle is an angle indicating a displacement direction of a linking point between the trailer and the tractor.

# Fig.1

# Fig.2

## Fig.3

```
        START

         ↓          ~S10
    ┌─────────────────┐  NO
   <  TRAILER LENGTH Lt >─────────┐
    \    ACQUIRED?    /           │
     └───────┬───────┘            │
             │ YES                ↓←──────────┐
             │            ┌──────────────┐~S12 │
             │            │   DISPLAY    │     │
             │            │ INPUT REQUEST│     │
             │            └──────┬───────┘     │
             │                   ↓      ~S14    │
             │            ┌─────────────┐  NO   │
             │           <   INPUT?     >───────┘
             │            └──────┬──────┘
             │                   │ YES
             │                   ↓      ~S16
             │            ┌─────────────┐
             │            │  STORE Lt   │
             │            └──────┬──────┘
             ↓←─────────────────┘
        ┌─────────┐
        │   END   │
        └─────────┘
```

## Fig.4

```
        START

          ↓           ~S20
    ┌──────────────────────┐
    │  ACQUIRE yr AND V     │
    └──────────┬───────────┘
               ↓          ~S22
    ┌──────────────────────┐
    │      ktr←yr/V         │
    └──────────┬───────────┘
               ↓          ~S24
    ┌──────────────────────┐
    │     READ OUT Lt       │
    └──────────┬───────────┘
               ↓          ~S26
    ┌──────────────────────┐
    │  α2←arctan(Lt・Ktr)   │
    └──────────┬───────────┘
               ↓
        ┌─────────┐
        │   END   │
        └─────────┘
```

# Fig.5

START

S30
REVERSE ASSIST MODE? — NO

YES

S32
ACQUIRE $\alpha 2*$

S34
$\alpha 1* \leftarrow f(\alpha 2, \alpha 2*)$

S36
ACQUIRE $\alpha 1$

S38
CALCULATE MANIPULATED VARIABLE

S40
OPERATE STEERING SYSTEM

END

## Fig.6A

## Fig.6B

## Fig.7

```
        ┌──────────────┐
        │    START     │
        └──────────────┘
               │
               ▼              ~S20a
    ┌──────────────────────┐
    │ ACQUIRE ωwr AND ωwl  │
    └──────────────────────┘
               │
               ▼              ~S22a
    ┌──────────────────────┐
    │  ktr←(ωwl-ωwr)/d      │
    └──────────────────────┘
               │
               ▼              ~S24
    ┌──────────────────────┐
    │    READ OUT Lt       │
    └──────────────────────┘
               │
               ▼              ~S26
    ┌──────────────────────┐
    │ α2←-arctan(Lt・Ktr)  │
    └──────────────────────┘
               │
               ▼
        ┌──────────────┐
        │     END      │
        └──────────────┘
```

## Fig.8

```
        ┌──────────────┐
        │    START     │
        └──────────────┘
               │
               ▼                     ~S50
        ╱─────────────────────╲  NO
       ⟨  REVERSE ASSIST MODE? ⟩────────┐
        ╲─────────────────────╱         │
               │ YES                     │
               ▼              ~S52       │
    ┌──────────────────────┐            │
    │  ACQUIRE α1 AND α2    │            │
    └──────────────────────┘            │
               │                         │
               ▼              ~S54       │
    ┌──────────────────────┐            │
    │    CALCULATE β        │            │
    └──────────────────────┘            │
               │                         │
               ▼              ~S56       │
    ┌──────────────────────┐            │
    │    ACQUIRE βth        │            │
    └──────────────────────┘            │
               │                         │
               ▼              ~S58       │
        ╱─────────────────╲   NO         │
       ⟨  |β-βth|≤Δth?     ⟩─────────────┤
        ╲─────────────────╱              │
               │ YES                      │
               ▼              ~S60        │
    ┌──────────────────────┐             │
    │  WARNING PROCESSING   │             │
    └──────────────────────┘             │
               │◄────────────────────────┘
               ▼
        ┌──────────────┐
        │     END      │
        └──────────────┘
```

# Fig.9

## INTERNATIONAL SEARCH REPORT

| | International application No. |
|---|---|
| | **PCT/JP2023/045399** |

**A.    CLASSIFICATION OF SUBJECT MATTER**

*B62D 12/00*(2006.01)i; *B62D 6/00*(2006.01)i; *B62D 13/06*(2006.01)i; *B62D 101/00*(2006.01)n; *B62D 113/00*(2006.01)n
FI:    B62D12/00; B62D6/00 ZYW; B62D13/06; B62D101:00; B62D113:00

According to International Patent Classification (IPC) or to both national classification and IPC

**B.    FIELDS SEARCHED**

Minimum documentation searched (classification system followed by classification symbols)

B62D12/00; B62D6/00; B62D13/06; B62D101/00; B62D113/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2003-34261 A (TOKYU CAR CORP.) 04 February 2003 (2003-02-04)<br>        paragraph [0052], fig. 2 | 1-9 |
| A | JP 9-267762 A (MITSUBISHI JIDOSHA KOGYO KABUSHIKI KAISHA) 14 October 1997 (1997-10-14)<br>        paragraphs [0012]-[0013], fig. 1 | 1-9 |
| A | US 2018/0001928 A1 (FORD GLOBAL TECHNOLOGIES, LLC) 04 January 2018 (2018-01-04)<br>        paragraphs [0042]-[0052], fig. 3 | 1-9 |
| A | US 2016/0139599 A1 (INTERNATIONAL TRUCK INTELLECTUAL PROPERTY COMPANY, LLC) 19 May 2016 (2016-05-19)<br>        paragraphs [0061]-[0065], fig. 5-6, 9-10 | 1-9 |
| A | US 2014/0005918 A1 (QIANG, Liu) 02 January 2014 (2014-01-02)<br>        paragraph [0062], fig. 4 | 1-9 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2023/045399**

| Patent document cited in search report | | | Publication date (day/month/year) | Patent family member(s) | | | Publication date (day/month/year) |
|---|---|---|---|---|---|---|---|
| JP | 2003-34261 | A | 04 February 2003 | (Family: none) | | | |
| JP | 9-267762 | A | 14 October 1997 | (Family: none) | | | |
| US | 2018/0001928 | A1 | 04 January 2018 | (Family: none) | | | |
| US | 2016/0139599 | A1 | 19 May 2016 | (Family: none) | | | |
| US | 2014/0005918 | A1 | 02 January 2014 | CA | 2818521 | A1 | |

Form PCT/ISA/210 (patent family annex) (July 2022)

**EP 4 640 524 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9340228 B